# FASCICULE DE BREVET EUROPEEN

(11) **EP 2 956 324 B1**
(45) Date de publication et mention de la délivrance du brevet: **20.05.2020**
(21) Numéro de dépôt: 14706917.3
(22) Date de dépôt: 11.02.2014
(51) Int. Cl.: B60J 5/04

(54) **STRUCTURE D'OUVRANT EN MATIÈRE PLASTIQUE DÉLIMITANT UN CORPS CREUX**
TÜRSTRUKTUR AUS PLASTIK WELCHE EINEN HOHLRAUM BEGRENZT
DOOR STRUCTURE MADE FROM PLASTIC MATERIAL DELIMITING A HOLLOW BODY

(30) Priorité: 13.02.2013 FR 1351207
(43) Date de publication de la demande: 23.12.2015
(73) Titulaire: Renault S.A.S., 92100 Boulogne-Billancourt (FR)
(72) Inventeur: GLAUMOT, Olivier, F-91470 Forges Les Bains (FR)
(86) Numéro de dépôt international: PCT/FR2014/050260
(87) Numéro de publication internationale: WO 2014/125205

(56) Documents cités:
- DE-A1- 3 423 827
- US-A- 4 945 682
- US-A1- 2004 217 623

## Description

### Domaine technique de l'invention

L'invention concerne une structure d'un ouvrant de véhicule automobile, notamment d'une porte latérale de véhicule automobile. Une telle structure est connue de US 2004/0217623 A.

L'invention a pour objet également un ouvrant de véhicule automobile, notamment une porte latérale de véhicule automobile, comprenant une telle structure et un véhicule automobile équipé d'au moins un tel ouvrant.

### État de la technique

Classiquement, une structure d'un ouvrant, notamment d'une porte latérale, d'un véhicule automobile est formée dans une matière métallique, ce qui permet de conférer la robustesse recherchée de l'ouvrant face aux chocs frontaux et latéraux appliqués à cet ouvrant.

Mais cette solution connue présente le problème essentiel du poids de l'ouvrant, ce qui est particulièrement important dans le domaine automobile en raison de la consommation et de la pollution engendrée.

Pour répondre à ce problème, une solution mettant en œuvre des matières plastiques en lieu et place des matières métalliques ne saurait conférer la raideur, la robustesse et les propriétés d'absorption de chocs nécessaires, notamment en raison des différences de Module d'Young entre les matériaux métalliques et plastiques.

Il a donc déjà été imaginé un ouvrant en matière plastique renforcé par un cadre métallique, en acier ou en aluminium. La raideur, la robustesse et l'absorption des chocs sont alors gérées par l'intermédiaire de ce cadre métallique qui appartient à la structure de l'ouvrant.

Toutefois, malgré les progrès apportés, cette solution présente encore un problème de poids de l'ouvrant qui de ce fait reste à optimiser, sans pour autant grever les propriétés de résistance de l'ouvrant en terme de robustesse, de raideur et d'absorption de chocs.

### Objet de l'invention

Le but de la présente invention est de proposer une structure d'un ouvrant de véhicule automobile qui remédie aux inconvénients listés ci-dessus.

En particulier, un objet de l'invention est de fournir une telle structure qui permette un gain de poids par rapport aux solutions existantes, tout en conférant les propriétés attendues de l'ouvrant en terme de raideur, de robustesse et d'absorption de chocs extérieurs appliqués à l'ouvrant.

Ces objectifs peuvent être atteints par une structure d'un ouvrant de véhicule automobile, notamment d'une porte latérale de véhicule automobile, comprenant d'une part une doublure intérieure en matière plastique disposée, suivant l'épaisseur de la structure, d'un côté de la structure destiné à être orienté vers l'habitacle du véhicule, d'autre part un renfort structurel extérieur en matière plastique disposé, suivant l'épaisseur de la structure, d'un côté de la structure opposé à l'habitacle par rapport à la doublure intérieure, la doublure intérieure et le renfort structurel extérieur étant configurés et assemblés l'un à l'autre de sorte à délimiter entre eux un corps creux conférant une résistance de l'ouvrant aux chocs extérieurs, notamment aux chocs frontaux et latéraux appliqués à la porte latérale.

Le corps creux délimité par le renfort structurel extérieur et la doublure intérieure assemblés entre eux peut être fermé sur toute la périphérie de l'ouvrant.

La doublure intérieure et le renfort structurel extérieur peuvent chacun être formés intégralement dans une matière plastique de type thermoplastique ou thermodurcissable.

Le renfort structurel extérieur peut avantageusement comprendre :
- des éléments de montage, sur le renfort structurel extérieur, d'éléments d'articulation destinés à articuler l'ouvrant sur une caisse d'un véhicule comprenant l'ouvrant,
- et/ou des éléments de montage, sur le renfort structurel extérieur, d'une serrure,
- et/ou des éléments de montage, sur le renfort structurel extérieur, d'une butée d'arrêt d'ouvrant,
- et/ou des éléments de montage, sur le renfort structurel extérieur, d'un haut-parleur,
- et/ou des éléments de montage, sur le renfort structurel extérieur, d'un élément poussoir de bassin,
- et/ou des éléments de montage, sur le renfort structurel extérieur, d'un bandeau de renfort d'ouvrant,
- et/ou des éléments de montage, sur le renfort structurel extérieur, de tout ou partie d'un rétroviseur,
- et/ou des éléments de montage, sur le renfort structurel extérieur, de tout ou partie d'éléments de guidage d'un vitrage destiné à coulisser par rapport à la structure entre la position relevée et une position abaissée logée dans la partie inférieure de l'ouvrant,
- et/ou un élément formant un cadre disposé en périphérie d'un vitrage en position relevée,
- et/ou des éléments d'étanchéité assurant une étanchéité à l'air et à l'eau entre le vitrage en position relevée et le renfort structurel extérieur.

La doublure intérieure peut comprendre :
- des éléments d'étanchéité destinés à assurer une étanchéité à l'air et à l'eau entre l'ouvrant et une caisse comprenant un tel ouvrant,
- et/ou des éléments enjoliveurs assurant une finition esthétique extérieure de l'ouvrant par rapport à la caisse du véhicule,
- et/ou des éléments de montage, sur la doublure intérieure, d'éléments de finition assurant une finition esthétique intérieure de l'ouvrant du côté de l'habitacle.

Le renfort structurel extérieur et la doublure intérieure peuvent être assemblés entre eux par soudage, notamment de type ultrason ou laser, et/ou par collage et/ou par vissage et/ou par encliquetage et/ou par rivetage et/ou par bouterollage.

Un ouvrant de véhicule automobile, notamment porte latérale de véhicule automobile, pourra alors avantageusement comprendre une telle structure.

Cet ouvrant pourra comprendre au moins un panneau extérieur de finition, notamment en matière thermoplastique, fixé sur la structure, d'un côté de l'ouvrant opposé à l'habitacle par rapport à la structure, notamment sur le renfort structurel extérieur.

Il peut aussi comprendre au moins un élément de rigidification, notamment formé dans une matière thermoplastique, interposé entre la structure et le panneau extérieur de finition de sorte à conférer une raideur au panneau extérieur de finition face aux chocs extérieurs appliqués à l'ouvrant du côté opposé à l'habitacle.

La structure et/ou l'élément de rigidification et/ou le panneau extérieur de finition sont notamment assemblés entre eux par soudage, notamment de type ultrason ou laser, et/ou par collage et/ou par vissage et/ou par encliquetage et/ou par rivetage et/ou par bouterollage.

De plus, préférentiellement, un vitrage peut être disposé entre la structure et l'élément de rigidification, en étant disposé à l'extérieur du corps creux délimité par la structure indépendamment de sa position prise entre ses positions extrémales abaissée et relevée.

Enfin, un véhicule automobile pourra être équipé d'au moins un tel ouvrant.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective d'un éclaté de l'assemblage d'une porte latérale de véhicule automobile comprenant un exemple de structure selon l'invention,
- la figure 2 est une vue en perspective du renfort structurel extérieur appartenant à la structure utilisée dans la figure 1,
- la figure 3 est une vue en perspective de la doublure intérieure appartenant à la structure utilisée dans la figure 1,
- la figure 4 est une vue en coupe transversale-verticale de la porte latérale de la figure 1,
- la figure 5 est une vue en coupe longitudinale-horizontale de la porte latérale de la figure 1,
- et la figure 6 est une vue en coupe longitudinale-horizontale de la porte latérale de la figure 1 au niveau d'un montant du cadre de vitrage.

### Description de modes préférentiels de l'invention

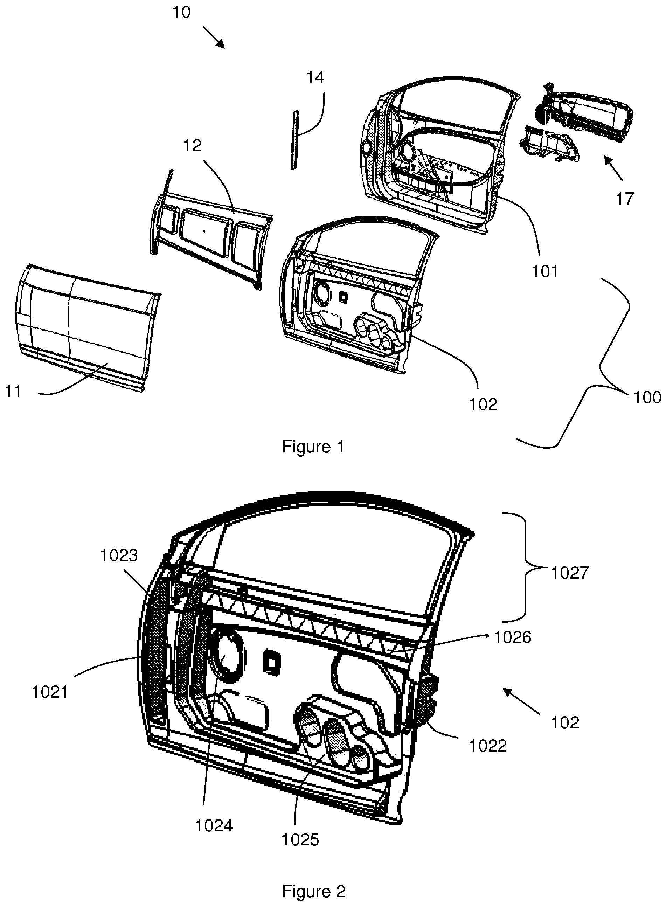

L'invention va être décrite ci-après en relation avec les figures 1 à 6 annexées qui représentent un exemple d'ouvrant 10 de véhicule automobile selon l'invention et comprenant un exemple de structure 100 de l'ouvrant 10 selon l'invention. Les figures 1 à 6 concernent le cas particulier non limitatif mais particulièrement visé par l'invention d'un ouvrant 10 constitué par une porte latérale de véhicule automobile. Toutefois, cet ouvrant 10 peut être formé par un autre type d'ouvrant tel qu'un hayon.

Plus précisément, l'ouvrant 10 de véhicule automobile, notamment ici la porte latérale selon le mode de réalisation illustré, comprend une structure 100 développée ci-après.

Le terme « structure » utilisé dans ce document signifie qu'il s'agit de l'élément de l'ouvrant 10 qui est destiné à encaisser la grande majorité des efforts résultant de chocs extérieurs appliqués à l'ouvrant 10. Ainsi, une partie nettement plus faible desdits efforts peut toutefois être destinée à être encaissée par d'autres éléments de l'ouvrant 10 indépendants de la structure 100, en particulier au moins un panneau extérieur de finition 11 et éventuellement au moins un élément de rigidification 12 interposé entre la structure 100 et le panneau extérieur de finition 11. Cet élément de rigidification 12 a pour effet de conférer une raideur au panneau extérieur de finition 11 face aux chocs extérieurs appliqués à l'ouvrant 10 du côté opposé à l'habitacle, en sus de celle conférée par la structure 100. La raideur conférée à l'ouvrant 10 par l'intermédiaire d'un tel élément de rigidification 12 vient donc s'ajouter aux propriétés de raideur, de robustesse et d'absorption de chocs conférée à l'ouvrant 10 par la structure 100.

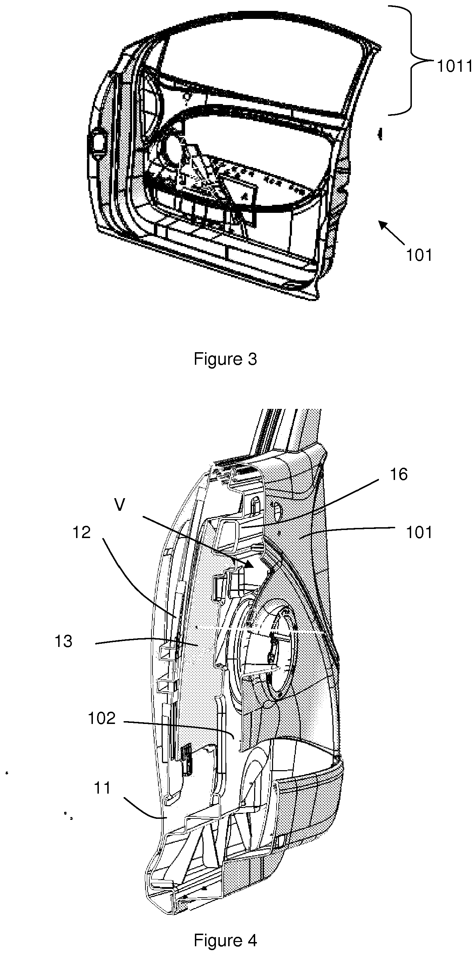

Selon une caractéristique essentielle, la structure 100 de l'ouvrant 10 comprend une doublure intérieure 101 (figures 1 et 3) et un renfort structurel extérieur 102 (figures 1 et 2) tous deux formés essentiellement dans une matière plastique. La matière plastique utilisée pour former la doublure intérieure 101 peut être identique ou différente de celle dans laquelle est formé le renfort structurel extérieur 102. Suivant la direction correspondant à l'épaisseur de la structure 100 (ce qui correspond à la direction de l'épaisseur de l'ouvrant 10 destinée globalement à être orientée selon la direction horizontale transversale du véhicule dans le cas d'une porte latérale lorsque celle-ci est fermée par rapport à la caisse du véhicule), la doublure intérieure 101 est disposée d'un côté de la structure 100 destiné à être orienté en direction de l'habitacle du véhicule. Par contre, le renfort structurel extérieur 102 est disposé, suivant l'épaisseur de la structure 100, d'un côté de la structure 100 opposé à l'habitacle du véhicule par rapport à la doublure intérieure 101. Autrement dit, le renfort structurel extérieur 102 est orienté en direction de l'extérieur du véhicule dans un sens opposé au sens allant en direction de l'habitacle.

De manière essentielle, la doublure intérieure 101 et le renfort structurel extérieur 102 sont configurés (ce qui correspond à une définition du dimensionnement, de l'organisation spatiale et des formes de ces deux éléments) et assemblés l'un à l'autre de sorte à délimiter entre eux un corps creux conférant une résistance (raideur, robustesse, propriété d'absorption d'énergie) de l'ouvrant 10 aux chocs extérieurs, notamment aux chocs frontaux et latéraux appliqués à l'ouvrant 10 lorsqu'il est constitué par une porte latérale.

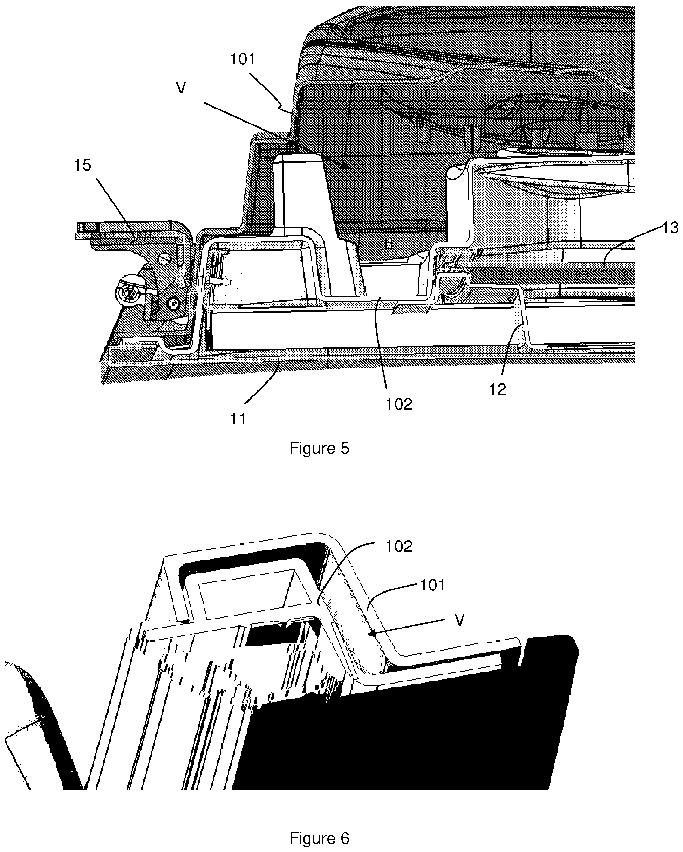

Il est entendu par « corps creux » le fait que la doublure intérieure 101 et le renfort structurel extérieur 102 délimitent entre eux un volume intérieur noté « V » (figure 5), de type caisson ou cavité, que ce volume V soit fermé ou partiellement ouvert vers l'extérieur. Ce corps creux périphérique de l'ouvrant 10 participe grandement à la raideur de l'ensemble et permet de satisfaire les cahiers de charges fonctionnels subis par un ouvrant 10, notamment une porte latérale. De ce fait cette structure 100 préassemblée supporte la plus grande majorité, voire l'intégralité, des entrées et des sorties d'efforts mécaniques subis par un ouvrant, notamment une porte latérale.

Tandis que des techniques actuelles intègrent des renforts en matière métallique (acier ou aluminium) dans des portes latérales pour garantir les prestations, généralement assemblés par surmoulage, la solution décrite ici permet de gagner du poids grâce à l'utilisation de matières plastiques tout en conférant les propriétés mécaniques nécessaires à la fonction de l'ouvrant 10 par l'intermédiaire de l'agencement du corps creux délimité par la structure 100.

Avantageusement, le corps creux délimité par le renfort structurel extérieur 102 et la doublure intérieure 101 assemblés entre eux est fermé sur toute la périphérie de l'ouvrant 10. Eventuellement, le corps creux délimité par le renfort structurel extérieur 102 et la doublure intérieure 101 assemblés entre eux est fermé sur au moins une partie de la périphérie de l'ouvrant 10. Cela peut être obtenu en prévoyant une mise en contact continue de la doublure intérieure 101 contre le renfort structurel extérieur 102 de préférence sur tout le pourtour de l'ouvrant 10, dans toute la partie inférieure de l'ouvrant 10 au niveau de laquelle est disposé le vitrage 13 dans sa position abaissée et dans toute la partie supérieure de l'ouvrant formant un cadre ceinturant le vitrage 13 lorsqu'il occupe sa position relevée. Il peut par exemple d'agir d'une piste de soudure continue agencée sur tout le pourtour périphérique de la doublure intérieure 101 illustrée sur la figure 3, même au niveau du cadre 1011 de la doublure intérieure 101 qui ceinture le vitrage 13 en position relevée. Ces caractéristiques n'excluent pas que le corps creux puisse être ouvert dans une partie centrale de l'ouvrant 10, en particulier à proximité de la liaison entre lesdites parties inférieure et supérieure de l'ouvrant 10, où par exemple sont agencés des éléments de montage 1026 d'un bandeau de renfort 16 d'ouvrant 10 sur le renfort structurel extérieur 102. La figure 6 illustre en particulier que le corps creux s'étend de manière continue même sur les montants de l'ouvrant 10 dans sa partie supérieure, c'est-à-dire le long des montants du cadre 1011 délimité par la partie supérieure de la doublure intérieure 101 et des montants du cadre 1027 délimité par la partie supérieure du renfort 102 et placés en vis-à-vis et à distance des montants du cadre 101 pour délimiter localement ledit corps creux à la périphérie supérieure de l'ouvrant 10. Cette caractéristique se prolonge sur la traverse supérieure de l'ouvrant 10 reliant les montants de l'ouvrant 10. De même, en partie inférieure de l'ouvrant 10, la doublure intérieure 101 et le renfort 102 sont placés en vis-à-vis et à distance de sorte à délimiter localement ledit corps creux à la périphérie inférieure de l'ouvrant 10.

La doublure intérieure 101 et le renfort structurel extérieur 102 sont chacun formés intégralement dans une matière plastique de type thermoplastique ou thermodurcissable. La matière thermoplastique est par exemple une matrice polypropylène ou polyamide. La matière thermodurcissable est par exemple à base de résine epoxy ou de type « SMC » ou « Sheet Molding Compound ».

En référence à la figure 2 notamment, le renfort structurel extérieur 102 peut comprendre avantageusement :
- des éléments de montage 1021, sur le renfort structurel extérieur 102, d'éléments d'articulation 14 (de type charnière) destinés à articuler l'ouvrant 10 sur une caisse d'un véhicule comprenant l'ouvrant 10,
- et/ou des éléments de montage 1022, sur le renfort structurel extérieur 102, d'une serrure 15,
- et/ou des éléments de montage 1023, sur le renfort structurel extérieur 102, d'une butée d'arrêt (non représentée) d'ouvrant,
- et/ou des éléments de montage 1024, sur le renfort structurel extérieur 102, d'un haut-parleur (non représenté),
- et/ou des éléments de montage 1025, sur le renfort structurel extérieur 102, d'un élément poussoir de bassin (non représenté),
- des éléments de montage 1026, sur le renfort structurel extérieur 102, d'un bandeau de renfort 16 d'ouvrant,
- des éléments de montage, sur le renfort structurel extérieur 102, de tout ou partie d'un rétroviseur (non représenté),
- un élément formant un cadre 1027 disposé en périphérie du vitrage 13 en position relevée, en coïncidence avec le cadre 1011 délimité en partie haute par la doublure intérieure 101,
- des éléments d'étanchéité assurant une étanchéité à l'air et à l'eau entre le vitrage 13 en position relevée et le renfort structurel extérieur 102,
- des éléments de montage, sur le renfort structurel extérieur 102, de tout ou partie d'éléments de guidage (par exemple sous la forme de rails de guidage fixés au renfort 102) du vitrage 13 destiné à coulisser par rapport à la structure 100 entre la position relevée ceinturée par le cadre 1011 délimité par la doublure intérieure 101 en partie supérieure et/ou le cadre 1027 délimité par le renfort structurel extérieur 102 dans sa partie supérieure, et une position abaissée disposée au niveau, par exemple au droit ou en dedans, de la partie inférieure de l'ouvrant 10 formée par la combinaison des parties inférieures de la doublure intérieure 101 et du renfort structurel extérieur 102.

Avantageusement, la doublure intérieure 101 peut aussi comprendre au moins un élément fonctionnel choisi parmi les suivants :
- des éléments d'étanchéité (non représentés) destinés à assurer une étanchéité à l'air et à l'eau entre l'ouvrant 10 et une caisse comprenant un tel ouvrant 10,
- et/ou des éléments enjoliveurs (non représentés) assurant une finition esthétique extérieure de l'ouvrant 10 par rapport à la caisse du véhicule,
- et/ou des éléments de montage, sur la doublure intérieure 101, d'éléments de finition 17 assurant une finition esthétique intérieure de l'ouvrant 10 du côté de l'habitacle ; il peut s'agir notamment d'éléments 17 d'ébénisterie divers, notamment en matière plastique.

Grâce à l'aménagement d'une telle structure 100 dans une matière essentiellement plastique, le renfort structurel extérieur 102 et la doublure intérieure 101 peuvent avantageusement être assemblés entre eux par soudage, notamment de type ultrason ou laser, et/ou par collage. Alternativement ou de manière combinée, la fixation du renfort structurel extérieur 102 avec la doublure intérieure 101 peut toutefois se faire par vissage et/ou par encliquetage et/ou par rivetage et/ou par bouterollage, en fonction des besoins et des propriétés mécaniques recherchées (raideur, robustesse, capacité d'absorption d'énergie résultant des chocs extérieurs).

Comme il a été indiqué précédemment, l'ouvrant 10 comprend, en sus de la structure 100, au moins un panneau extérieur de finition 11 qui peut notamment être en matière thermoplastique et qui est fixé sur la structure 100 d'un côté de l'ouvrant 10 opposé à l'habitacle par rapport à la structure 100. La fixation du panneau extérieur de finition 11 peut notamment se faire sur le renfort structurel extérieur 102. D'autre part, il est rappelé que l'ouvrant 10 peut comprendre au moins un élément de rigidification 12, notamment formé dans une matière thermoplastique, interposé entre la structure 100 et le panneau extérieur de finition 11 de sorte à conférer une raideur au panneau extérieur de finition 11 face aux chocs extérieurs appliqués à l'ouvrant 10 du côté opposé à l'habitacle.

Pour réaliser l'assemblage de l'ouvrant 10, le renfort structurel extérieur 102 et/ou l'élément de rigidification 12 et/ou le panneau extérieur de finition 11 peuvent avantageusement être assemblés entre eux par soudage, notamment de type ultrason ou laser, et/ou par collage, ce qui est rendu par l'utilisation d'une matière constitutive de ces éléments essentiellement plastique. Toutefois, comme précédemment pour l'assemblage de la structure 100, il reste possible d'envisager des solutions mécaniques telles que le vissage et/ou un encliquetage et/ou le rivetage et/ou un bouterollage, en fonction des besoins et des propriétés mécaniques recherchées (raideur, robustesse, capacité d'absorption d'énergie résultant des chocs extérieurs).

Il ressort donc de ce qui précède que l'ouvrant 10 comprend, en allant de l'habitacle du véhicule vers l'extérieur :
- la doublure intérieure 101 essentiellement en matière plastique,
- puis le renfort structurel extérieur 102 essentiellement en matière plastique et assemblé avec la doublure intérieure 101 de sorte à constituer la structure 100 telle que décrite précédemment,
- puis l'élément de rigidification 12, notamment en matière thermoplastique,
- puis au moins un panneau extérieur de finition 11 en plastique fixé à la structure 100, notamment au renfort structurel extérieur 102.

Dans cet empilement, l'élément de rigidification 12 est fixé au panneau 11 qu'il est destiné à renforcer et/ou à la structure 100, notamment sur le renfort structurel extérieur 102.

D'autres éléments intermédiaires peuvent être inclus tels que le vitrage 13 et au moins un bandeau de renfort 16 d'ouvrant, par exemple disposé à l'intérieur du corps creux entre la doublure intérieure 101 et le renfort structurel extérieur 102. De manière intéressante, le vitrage 13 peut être disposé entre la structure 100 et l'élément de rigidification 12, en étant disposé à l'extérieur du corps creux délimité par la structure 100 indépendamment de sa position prise entre ses positions extrémales abaissée et relevée. Cette caractéristique est intéressante car en position abaissée, le vitrage 13 se retrouve alors situé vers l'extérieur de l'ouvrant par rapport à la structure. Cela peut induire une nécessité de prévoir un galbe spécifique du vitrage 13 et une fixation spécifique du vitrage 13, par exemple à l'élément de rigidification 12.

Enfin, l'invention concerne un véhicule automobile équipé d'au moins un tel ouvrant 10, notamment au niveau de l'aménagement d'au moins l'une de ses portes latérales, qu'elle soit pivotante ou coulissante par rapport au reste de la caisse du véhicule.

Un avantage essentiel de la solution décrite précédemment est un gain de poids sur les ouvrants, notamment les ouvrants latéraux. Sur un véhicule automobile de type berline, ce gain est estimé entre 15 et 20 Kg, obtenu tout en conférant les propriétés mécaniques nécessaires à l'ouvrant (en terme de raideur, de robustesse et de capacité d'absorption d'énergie due aux chocs extérieurs) grâce à l'aménagement du corps creux délimité par la structure 100.

Ce principe d'un ouvrant 10 entièrement en plastique, notamment en matière thermoplastique, permet de respecter les principes de recyclage des pièces plastiques. Cette solution peut donc permettre de gagner du poids par rapport à une solution classique en tôle d'acier sans dégrader la prestation de recyclage.

Ce principe d'un ouvrant 10 entièrement en plastique, notamment en matière thermoplastique, permet aussi d'augmenter beaucoup l'inertie mécanique, par rapport aux solutions existantes, dans les sections de l'ouvrant 10 au niveau des zones de l'ouvrant 10 où l'intensité des efforts à encaisser est la plus importante.

De plus, la géométrie de l'ouvrant 10 peut être réalisée tout ou partie par le renfort structurel extérieur 102 lié à la doublure intérieure 101. Les autres pièces de l'ouvrant, notamment le panneau extérieur de finition 11 n'ont qu'un rôle d'habillage et de finition esthétique.

Lors de l'assemblage de l'ouvrant 10, il peut être réalisé une étape de pré-assemblage de la structure 100 (en assemblant la doublure intérieure 101 avec le renfort structurel extérieur 102) avant la mise en œuvre des étapes de fixation des autres composants (vitrage 13, élément de rigidification 12, bandeau de renfort 16, panneau extérieur de finition 11, éléments 17) sur la structure 100 et/ou entre eux.

La doublure intérieure 101 et le renfort structurel extérieur 102 ont chacun un rôle spécifique. La doublure intérieure 101 qui peut aussi être nommée « caisson » dans tout le document, gère seul l'aspect intérieur de l'ouvrant 10 en intégrant la grande majorité des pièces constituant une ébénisterie de porter latérale classique. Elle supporte aussi la piste continue d'étanchéité à l'air et à l'eau pour ainsi garantir cette prestation vis-à-vis de l'habitacle. Elle intègre aussi les enjoliveurs (non représentés) de cadre 1011 utilisés sur des véhicules haut de gamme.

Le renfort structurel extérieur 102 intègre ou porte tous les autres composants tels que définis précédemment : éléments d'articulation 14, une serrure 15, une butée d'arrêt, un haut-parleur, un élément poussoir de bassin, un bandeau de renfort 16 d'ouvrant, tout ou partie d'un rétroviseur, un cadre 1027 délimité en partie haute, des éléments d'étanchéité assurant une étanchéité à l'air et à l'eau entre le vitrage 13 en position relevée et le renfort structurel extérieur 102, tout ou partie d'éléments de guidage du vitrage 13. Ce renfort 102 étant non visible depuis l'extérieur de l'ouvrant 10, il n'y a aucune contrainte d'aspect, permettant de dimensionner le renfort structurel extérieur 102 (nervures, formes, épaisseurs etc...) sans contraintes esthétiques. En outre, cette solution permet d'avoir un montage de ces composants par l'extérieur et donc d'avoir une doublure intérieure 101 qui assure, comme il l'a déjà été expliqué, une fonction partielle ou totale d'habillage intérieur tout en intégrant la piste d'étanchéité principale par rapport à la caisse.

Dans le cadre d'une étanchéité réalisée sur l'ouvrant (et/ou sur la caisse), afin d'optimiser encore plus la fonction recherchée et le gain de poids, il est envisageable de rendre le renfort structurel extérieur 102 visible au niveau du cadre 1011, de lui faire intégrer une partie de l'étanchéité et les enjoliveurs de cadre.

## Revendications

1. Structure (100) d'un ouvrant (10) de véhicule automobile, comprenant d'une part une doublure intérieure (101) en matière plastique disposée, suivant l'épaisseur de la structure (100), d'un côté de la structure destiné à être orienté vers l'habitacle du véhicule, d'autre part un renfort structurel extérieur (102) en matière plastique disposé, suivant l'épaisseur de la structure (100), d'un côté de la structure (100) opposé à l'habitacle par rapport à la doublure intérieure (101), la doublure intérieure (101) et le renfort structurel extérieur (102) étant configurés et assemblés l'un à l'autre de sorte à délimiter entre eux un corps creux conférant une résistance de l'ouvrant (10) aux chocs extérieurs, notamment aux chocs frontaux et latéraux appliqués à la porte latérale, la structure étant **caractérisée en ce que** le corps creux est fermé sur toute la périphérie de l'ouvrant (10).

2. Structure (100) selon la revendication 1, **caractérisée en ce que** la doublure intérieure (101) et le renfort structurel extérieur (102) sont chacun formés intégralement dans une matière plastique de type thermoplastique ou thermodurcissable.

3. Structure (100) selon l'une des revendications 1 à 2, **caractérisée en ce que** le renfort structurel extérieur (102) comprend :
- des éléments de montage (1021), sur le renfort structurel extérieur (102), d'éléments d'articulation (14) destinés à articuler l'ouvrant (10) sur une caisse d'un véhicule comprenant l'ouvrant (10),
- et/ou des éléments de montage (1022), sur le renfort structurel extérieur (102), d'une serrure (15),
- et/ou des éléments de montage (1023), sur le renfort structurel extérieur (102), d'une butée d'arrêt d'ouvrant,
- et/ou des éléments de montage (1024), sur le renfort structurel extérieur (102), d'un haut-parleur,
- et/ou des éléments de montage (1025), sur le renfort structurel extérieur (102), d'un élément poussoir de bassin,
- et/ou des éléments de montage (1026), sur le renfort structurel extérieur (102), d'un bandeau de renfort (16) d'ouvrant,
- et/ou des éléments de montage, sur le renfort structurel extérieur (102), de tout ou partie d'un rétroviseur,
- et/ou des éléments de montage, sur le renfort structurel extérieur (102), de tout ou partie d'éléments de guidage d'un vitrage (13) destiné à coulisser par rapport à la structure (100) entre la position relevée et une position abaissée logée dans la partie inférieure de l'ouvrant 10,
- et/ou un élément formant un cadre (1027) disposé en périphérie d'un vitrage (13) en position relevée,
- et/ou des éléments d'étanchéité assurant une étanchéité à l'air et à l'eau entre le vitrage (13) en position relevée et le renfort structurel extérieur (102).

4. Structure (100) selon l'une des revendications 1 à 3, **caractérisée en ce que** la doublure intérieure (101) comprend :
- des éléments d'étanchéité destinés à assurer une étanchéité à l'air et à l'eau entre l'ouvrant (10) et une caisse comprenant un tel ouvrant (10),
- et/ou des éléments enjoliveurs assurant une finition esthétique extérieure de l'ouvrant (10) par rapport à la caisse du véhicule,
- et/ou des éléments de montage, sur la doublure intérieure (101), d'éléments de finition (17) assurant une finition esthétique intérieure de l'ouvrant (10) du côté de l'habitacle.

5. Structure (100) selon l'une des revendications 1 à 4, **caractérisé en ce que** le renfort structurel extérieur (102) et la doublure intérieure (101) sont assemblés entre eux par soudage, notamment de type ultrason ou laser, et/ou par collage et/ou par vissage et/ou par encliquetage et/ou par rivetage et/ou par bouterollage.

6. Ouvrant (10) de véhicule automobile, notamment porte latérale de véhicule automobile, comprenant une structure (100) selon l'une quelconque des revendications précédentes.

7. Ouvrant (10) selon la revendication 6, **caractérisé en ce qu'**il comprend au moins un panneau extérieur de finition (11), notamment en matière thermoplastique, fixé sur la structure (100), d'un côté de l'ouvrant (10) opposé à l'habitacle par rapport à la structure (100), notamment sur le renfort structurel extérieur (102).

8. Ouvrant (10) selon la revendication 7, **caractérisé en ce qu'**il comprend au moins un élément de rigidification (12), notamment formé dans une matière thermoplastique, interposé entre la structure (100) et le panneau extérieur de finition (11) de sorte à conférer une raideur au panneau extérieur de finition (11) face aux chocs extérieurs appliqués à l'ouvrant (10) du côté opposé à l'habitacle.

9. Ouvrant (10) selon l'une des revendications 7 ou 8, **caractérisé en ce que** la structure (100) et/ou l'élément de rigidification (12) et/ou le panneau extérieur de finition (11) sont assemblés entre eux par soudage, notamment de type ultrason ou laser, et/ou par collage et/ou par vissage et/ou par encliquetage et/ou par rivetage et/ou par bouterollage.

10. Ouvrant (10) selon l'une des revendications 8 à 9, **caractérisé en ce que** un vitrage (13) est disposé entre la structure (100) et l'élément de rigidification (12), en étant disposé à l'extérieur du corps creux délimité par la structure (100) indépendamment de sa position prise entre ses positions extrémales abaissée et relevée.

11. Véhicule automobile équipé d'au moins un ouvrant (10) selon l'une des revendications 6 à 10.

## Patentansprüche

1. Struktur (100) eines Kraftfahrzeug-Öffnungselements (10), die einerseits eine Innenverkleidung (101) aus Kunststoff, die der Dicke der Struktur (100) folgend auf einer Seite der Struktur angeordnet ist, die dazu bestimmt ist, zum Innenraum des Fahrzeugs hin ausgerichtet zu sein, andererseits eine äußere Strukturverstärkung (102) aus Kunststoff enthält, die der Dicke der Struktur (100) folgend auf einer Seite der Struktur (100) entgegengesetzt zum Innenraum bezüglich der Innenverkleidung (101) angeordnet ist,
wobei die Innenverkleidung (101) und die äußere Strukturverstärkung (102) so konfiguriert und zusammengebaut sind, dass sie zwischen sich einen Hohlkörper begrenzen, der dem Öffnungselement (10) eine Festigkeit gegenüber äußeren Aufprallen verleihen, insbesondere Front- und Seitenaufprallen, die auf die Seitentür ausgeübt werden, wobei die Struktur **dadurch gekennzeichnet ist, dass** der Hohlkörper über den ganzen Umfang des Öffnungselements (10) geschlossen ist.

2. Struktur (100) nach Anspruch 1, **dadurch gekennzeichnet, dass** die Innenverkleidung (101) und die äußere Strukturverstärkung (102) je vollständig aus einem Kunststoff vom thermoplastischen oder wärmehärtbaren Typ geformt sind.

3. Struktur (100) nach einem der Ansprüche 1 bis 2, **dadurch gekennzeichnet, dass** die äußere Strukturverstärkung (102) enthält:
- Elemente zur Montage (1021) von Gelenkelementen (14), die dazu bestimmt sind, das Öffnungselement (10) an eine Karosserie eines das Öffnungselement (10) enthaltenden Fahrzeugs anzulenken, auf die äußere Strukturverstärkung (102),
- und/oder Elemente zur Montage (1022) eines Türschlosses (15) auf die äußere Strukturverstärkung (102),
- und/oder Elemente zur Montage (1023) eines Stoppanschlags des Öffnungselements auf die äußere Strukturverstärkung (102),
- und/oder Elemente zur Montage (1024) eines Lautsprechers auf die äußere Strukturverstärkung (102),
- und/oder Elemente zur Montage (1025) eines Becken-Schieberelements auf die äußere Strukturverstärkung (102),
- und/oder Elemente zur Montage (1026) eines Verstärkungsstreifens (16) des Öffnungselements auf die äußere Strukturverstärkung (102),
- und/oder Elemente zur Montage des ganzen oder eines Teils eines Rückspiegels auf die äußere Strukturverstärkung (102),
- und/oder Elemente zur Montage aller oder eines Teils von Führungselementen einer Verglasung (13), die dazu bestimmt ist, bezüglich der Struktur (100) zwischen der hochgekurbelten Stellung und einer heruntergekurbelten Stellung zu gleiten, die im unteren Teil des Öffnungselements (10) untergebracht ist, auf die äußere Strukturverstärkung (102),
- und/oder ein einen Rahmen formendes Element (1027), das am Umfang einer Verglasung (13) in hochgekurbelter Stellung angeordnet ist,
- und/oder Dichtungselemente, die eine Dichtheit gegenüber Luft und Wasser zwischen der Verglasung (13) in hochgekurbelter Stellung und der äußeren Strukturverstärkung (102) gewährleisten.

4. Struktur (100) nach einem der Ansprüche 1 bis 3, **dadurch gekennzeichnet, dass** die Innenverkleidung (101) enthält:
- Dichtungselemente, die dazu bestimmt sind, eine Dichtheit gegenüber Luft und Wasser zwischen dem Öffnungselement (10) und einer ein solches Öffnungselement (10) enthaltenden Karosserie zu gewährleisten,
- und/oder Zierleistenelemente, die einen ästhetischen Außenabschluss des Öffnungselements (10) bezüglich der Karosserie des Fahrzeugs gewährleisten,
- und/oder Elemente zur Montage von Abschlusselementen (17) auf die Innenverkleidung (101), die einen ästhetischen Innenabschluss des Öffnungselements (10) auf der Seite des Innenraums gewährleisten.

5. Struktur (100) nach einem der Ansprüche 1 bis 4, **dadurch gekennzeichnet, dass** die äußere Strukturverstärkung (102) und die Innenverkleidung (101) durch Schweißen, insbesondere von der Art Ultraschall oder Laser, und/oder durch Kleben und/oder durch Schrauben und/oder durch Einrasten und/oder durch Nieten und/oder Döppern zusammengebaut werden.

6. Öffnungselement (10) eines Kraftfahrzeugs, insbesondere Seitentür eines Kraftfahrzeugs, das eine Struktur (100) nach einem der vorhergehenden Ansprüche enthält.

7. Öffnungselement (10) nach Anspruch 6, **dadurch gekennzeichnet, dass** es eine äußere Abschlussplatte (11) insbesondere aus thermoplastischem Material enthält, die an der Struktur (100) auf einer Seite des Öffnungselements (10) entgegengesetzt zum Innenraum bezüglich der Struktur (100) befestigt ist, insbesondere auf der äußeren Strukturverstärkung (102).

8. Öffnungselement (10) nach Anspruch 7, **dadurch gekennzeichnet, dass** es mindestens ein Versteifungselement (12) enthält, insbesondere aus einem thermoplastischen Material geformt, das zwischen die Struktur (100) und die äußere Abschlussplatte (11) eingefügt wird, um der äußeren Abschlussplatte (11) eine Steifheit gegenüber den Aufprallen von außen zu verleihen, die von der dem Innenraum entgegengesetzten Seite auf das Öffnungselement (10) ausgeübt werden.

9. Öffnungselement (10) nach einem der Ansprüche 7 oder 8, **dadurch gekennzeichnet, dass** die Struktur (100) und/oder das Versteifungselement (12) und/oder die äußere Abschlussplatte (11) durch Schweißen, insbesondere von der Art Ultraschall oder Laser, und/oder durch Kleben und/oder durch Schrauben und/oder durch Einrasten und/oder durch Nieten und/oder durch Döppern zusammengebaut werden.

10. Öffnungselement (10) nach einem der Ansprüche 8 bis 9, **dadurch gekennzeichnet, dass** eine Verglasung (13) zwischen der Struktur (100) und dem Versteifungselement (12) angeordnet ist, indem sie außerhalb des von der Struktur (100) begrenzten Hohlkörpers angeordnet ist, unabhängig von ihrer Stellung, die sie zwischen ihren heruntergekurbelten und hochgekurbelten Endstellungen einnimmt.

11. Kraftfahrzeug, das mit mindestens einem Öffnungselement (10) nach einem der Ansprüche 6 bis 10 ausgestattet ist.

## Claims

1. Structure (100) of an opening panel (10) of a motor vehicle, comprising, on the one hand, an inner lining (101) made from a plastic material arranged, depending on the thickness of the structure (100), on a side of the structure that is intended to face towards the passenger compartment of the vehicle, and, on the other hand, an outer structural reinforcement (102) made from a plastic material arranged, depending on the thickness of the structure (100), on a side of the structure (100) that is opposite the passenger compartment relative to the inner lining (101), the inner lining (101) and the outer structural reinforcement (102) being configured and assembled together so as to delimit between them a hollow body providing the opening panel (10) with resistance to external impacts, in particular to frontal and lateral impacts applied to the side door, the structure being **characterized in that** the hollow body is closed over the entire periphery of the opening panel (10).

2. Structure (100) according to Claim 1, **characterized in that** the inner lining (101) and the outer structural reinforcement (102) are each formed in their entirety from a plastic material of the thermoplastic or thermosetting type.

3. Structure (100) according to one of Claims 1 to 2, **characterized in that** the outer structural reinforcement (102) comprises:
- mounting elements (1021), on the outer structural reinforcement (102), for articulation elements (14) intended to articulate the opening panel (10) on a body shell of a vehicle comprising the opening panel (10),
- and/or mounting elements (1022), on the outer structural reinforcement (102), for a lock (15),
- and/or mounting elements (1023), on the outer structural reinforcement (102), for an end stop of the opening panel,
- and/or mounting elements (1024), on the outer structural reinforcement (102), for a loudspeaker,
- and/or mounting elements (1025), on the outer structural reinforcement (102), for a pelvic side airbag,
- and/or mounting elements (1026), on the outer structural reinforcement (102), for a reinforcing strip (16) of the opening panel,
- and/or mounting elements, on the outer structural reinforcement (102), for all or part of a rear-view mirror,
- and/or mounting elements, on the outer structural reinforcement (102), for all or part of guiding elements for a window glass (13) intended to slide relative to the structure (100) between the raised position and a lowered position and housed in the lower section of the opening panel 10,
- and/or an element forming a frame (1027) arranged on the periphery of a window glass (13) in the raised position,
- and/or sealing elements providing sealing against the ingress of air and water between the window glass (13) in the raised position and the outer structural reinforcement (102).

4. Structure (100) according to one of Claims 1 to 3, **characterized in that** the inner lining (101) comprises:
- sealing elements intended to provide sealing against the ingress of air and water between the opening panel (10) and a body shell comprising such an opening panel (10),
- and/or trim elements providing an attractive external finish for the opening panel (10) relative to the body shell of the vehicle,
- and/or mounting elements, on the inner lining (101), for finishing elements (17) providing an attractive internal finish for the opening panel (10) on the side of the passenger compartment.

5. Structure (100) according to one of Claims 1 to 4, **characterized in that** the outer structural reinforcement (102) and the inner lining (101) are assembled together by welding, in particular of the ultrasonic or laser type, and/or by adhesive bonding and/or by screwing and/or by snap-in engagement and/or by riveting and/or by heading.

6. Opening panel (10) of a motor vehicle, in particular a side door of a motor vehicle, comprising a structure (100) according to any of the preceding claims.

7. Opening panel (10) according to Claim 6, **characterized in that** it comprises at least one outer finishing panel (11), in particular made from a thermoplastic material, attached to the structure (100), on a side of the opening panel (10) opposite the passenger compartment relative to the structure (100), in particular on the outer structural reinforcement (102) .

8. Opening panel (10) according to Claim 7, **characterized in that** it comprises at least one stiffening element (12), in particular formed from a thermoplastic material, interposed between the structure (100) and the outer finishing panel (11) so as to impart a stiffness to the outer finishing panel (11) against the external impacts applied to the opening panel (10) on the side opposite the passenger compartment.

9. Opening panel (10) according to one of Claims 7 or 8, **characterized in that** the structure (100) and/or the stiffening element (12) and/or the outer finishing panel (11) are assembled together by welding, in particular of the ultrasonic or laser type, and/or by adhesive bonding and/or by screwing and/or by snap-in engagement and/or by riveting and/or by heading.

10. Opening panel (10) according to one of Claims 8 to 9, **characterized in that** the window glass (13) is positioned between the structure (100) and the stiffening element (12), by being arranged on the outside of the hollow body delimited by the structure (100) independently of the position adopted by it between its lowered and raised end positions.

11. Motor vehicle equipped with at least one opening panel (10) according to one of Claims 6 to 10.
